# EUROPEAN PATENT APPLICATION

(11) **EP 3 477 480 A1**
(43) Date of publication of application: **01.05.2019**
(21) Application number: 18188936.1
(22) Date of filing: 14.08.2018
(51) Int. Cl.: G06F 11/14, G06F 12/0871

(54) **METHODS AND COMPUTER PROGRAM PRODUCTS FOR A FILE BACKUP AND APPARATUSES USING THE SAME**

(30) Priority: 27.10.2017 US 201762577738 P; 10.07.2018 US 201816031482
(71) Applicant: Synology Incorporated, Taipei 103 (TW)
(72) Inventor: HSU, Chih-Cheng, 103 Taipei (TW); HSIEH, Yuh-Da, 103 Taipei (TW); LIN, Ching-Wei, 103 Taipei (TW); LU, Tung-Hsuan, 103 Taipei (TW)
(74) Representative: Viering, Jentschura & Partner mbB Patent- und Rechtsanwälte

(57) **Abstract**

The invention introduces an apparatus for a file backup, at least including a processing unit (210; 310) and a storage device (240; 340). The processing unit (210; 310) divides a source stream into a first and a second data streams according to last-modified information, performs a data deduplication procedure on the first data stream to generate and store unique chunks in the storage device (240; 340) and generate a first part of a first set of composition indices (445; 445_0) for the first data stream; copies composition indices (445; 445_0) corresponding to logical locations of the second data stream from a second set of composition indices (445; 445_0) for a previous version of the source stream as a second part of the first set of composition indices (445; 445_0); combines the first and second parts of the first set of composition indices (445; 445_0) according to logical locations of the source stream; and stores the first set of composition indices (445; 445_0) in the storage device (240; 340).

## Description

### BACKGROUND

The present invention relates to an apparatus and a related non-transitory computer program product for a file backup as defined in independent claims 1 and 11.

Data deduplication removes redundant data segments to compress data into a highly compact form and makes it economical to store backups in storage devices. The storage requirements for data protection have presented a serious problem for a Network-Attached Storage (NAS) system. The NAS system may perform daily incremental backups that copy only the data chunks which has modified since the last backup. An important requirement for enterprise data protection is fast lookup speed, typically faster than 1.28x10⁴ ops/s (operations per second). A significant challenge is to search data chunks at a faster rate on a low-cost system that cannot provide enough Random Access Memory (RAM) to store indices of the stored chunks. Thus, it is desirable to have methods and computer program products for a file backup and apparatuses using the same to overcome the aforementioned constraints.

This in mind, the present invention aims at providing an apparatus that avoids mistakenly bypassing a deduplication on portions of a source stream indicated by last-modified information.

This is achieved by an apparatus according to claim 1. The dependent claims pertain to corresponding further development and improvements.

As will be seen more clearly from the detailed description following below, the claimed apparatus includes a processing unit that performs a data deduplication procedure on portions of the source stream that are indicated by last-modified information to identify and process duplicate chunks therefrom.

Both the foregoing general description and the following detailed description are examples and explanatory only, and are not restrictive of the invention as claimed.

In the following, the invention is further illustrated by way of example, taking reference to the accompanying drawings. Thereof
FIG. 1 is a schematic diagram of the network architecture according to an embodiment of the invention,
FIG. 2 is the system architecture of a Network-Attached Storage (NAS) system according to an embodiment of the invention,
FIG. 3 is the system architecture of a client according to an embodiment of the invention,
FIG. 4 is a block diagram for a file backup according to an embodiment of the invention,
FIG. 5 is a flowchart illustrating a method for deduplicating data chunks according to an embodiment of the invention,
FIG. 6 is a flowchart illustrating a method for the data chunking and indexing, performed by a chunking module, according to an embodiment of the invention,
FIG. 7 is a schematic diagram for selecting hot sample indices for an Operating System (OS) according to an embodiment of the invention,
FIG. 8 is a schematic diagram of general and hot sample indices according to an embodiment of the invention,
FIG. 9 is a schematic diagram showing the variations of the chunks according to an embodiment of the invention,
FIG. 10 is a schematic diagram illustrating one set of composition indices according to an embodiment of the invention,
FIG. 11 is a flowchart illustrating a method for preparing cache indices for the buffered chunks, performed by a chunking module, according to an embodiment of the invention,
FIGS. 12 and 13 are flowcharts illustrating a method for searching duplicate chunks in a two-phase search according to an embodiment of the invention,
FIGS. 14 to 19 are schematic diagrams illustrating the variations of indices stored in a memory at moments t1 to t9 in a phase one search according to an embodiment of the invention,
FIG. 20 is a schematic diagram illustrating updates of the general and hot sample indices according to an embodiment of the invention, and
FIG. 21 is a flowchart illustrating a method for a file backup, performed by a backup engine installed in any of the storage server and the clients.

Reference is made in detail to embodiments of the invention, which are illustrated in the accompanying drawings. The same reference numbers may be used throughout the drawings to refer to the same or like parts, components, or operations.

The present invention will be described with respect to particular embodiments and with reference to certain drawings, but the invention is not limited thereto and is only limited by the claims. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

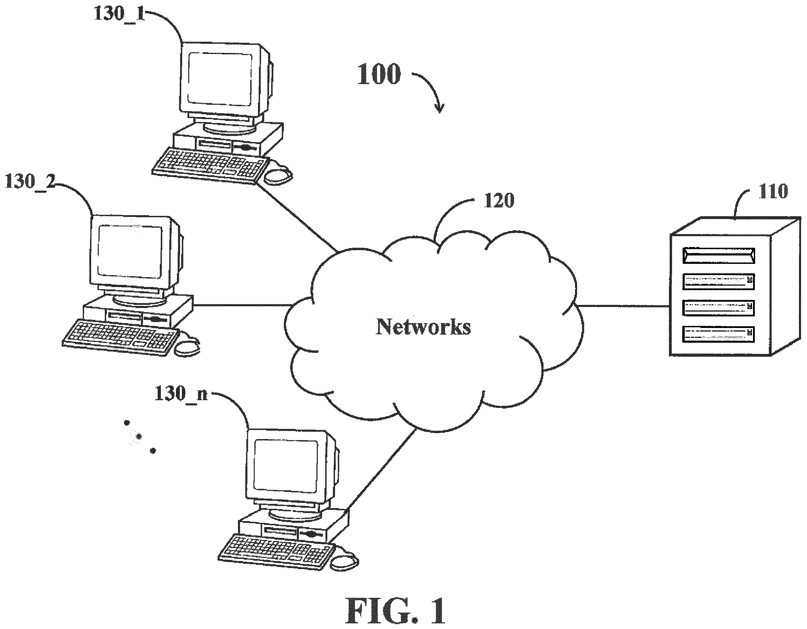

An embodiment of the invention introduces network architecture containing clients and a storage server to communicate each other for storing backup files in the storage server. FIG. 1 is a schematic diagram of the network architecture according to an embodiment of the invention. The storage server 110 may provide storage capacity for storing backup files of different versions that are received from the clients 130_1 to 130_n, where n is an arbitrary positive integer. Each backup files may include binary code of an OS (Operating System), system kernels, system drivers, IO drivers, applications and the like, and user data. Each backup files may be associated with a particular OS, such as iOSx, Windows™ 95, 97, XP, Vista, Win7, Win10, Linux, Ubuntu, or others. Any of the clients 130_1 to 130_n may backup files in the storage server 110 after being authenticated by the storage server 110. The storage server 110 may request an ID (Identification) and a password from the requesting client before a file-image backup. The requesting client starts to send a data stream of a backup files to the storage server 110 after passing the authentication. The backup operation is prohibited when the storage server 110 determines that the requesting client is not a legal user after examining the ID and the password. The requesting client may backup or restore a backup files of a particular version in or from the storage server 110 via the networks 120, where the networks 120 may include a Local Area Network (LAN), a wireless telephony network, the Internet, a Personal Area Network (PAN) or any combination thereof. The storage server 110 may be practiced in a Network-Attached Storage (NAS) system, a cloud storage server, or others. Although embodiments of the clients 130_1 to 130_n of FIG. 1 show Personal Computers (PCs), any of the clients 130_1 to 130_n may be practiced in a laptop computer, a tablet computer, a mobile phone, a digital camera, a digital recorder, an electronic consumer product, or others, and the invention should not be limited thereto.

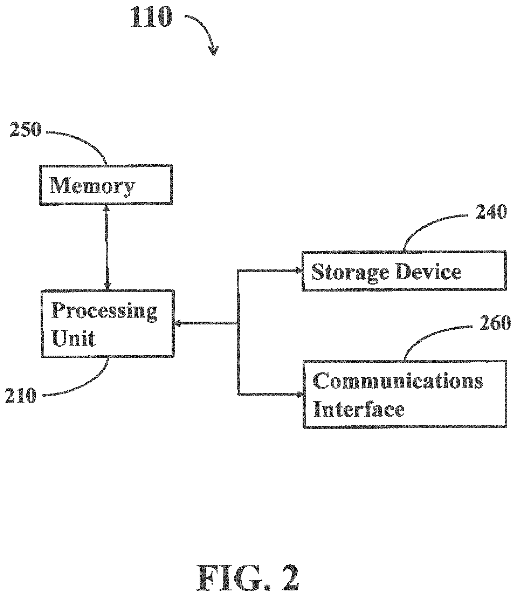

FIG. 2 is the system architecture of a NAS system according to an embodiment of the invention. The processing unit 210 can be implemented in numerous ways, such as with dedicated hardware, or with general-purpose hardware (e.g., a single processor, multiple processors or graphics processing units capable of parallel computations, or others) that is programmed using microcode or software instructions to perform the functions recited herein. The processing unit 210 may contain at least an Arithmetic Logic Unit (ALU) and a bit shifter. The ALU is multifunctional device that can perform both arithmetic and logic function. The ALU is responsible for performing arithmetic operations, such as add, subtraction, multiplication, division, or others, Boolean operations, such as AND, OR, NOT, NAND, NOR, XOR, XNOR, or others, and mathematical special functions, such as trigonometric functions, a square, a cube, a power of *n*, a square root, a cube root, a *n*-th root, or others. Typically, a mode selector input (M) decides whether ALU performs a logic operation or an arithmetic operation. In each mode different functions may be chosen by appropriately activating a set of selection inputs. The bit shifter is responsible for performing bitwise shifting operations and bitwise rotations. The system architecture further includes a memory 250 for storing necessary data in execution, such as variables, data tables, data abstracts, a wide range of indices, or others. The memory 250 may be a Random Access Memory (RAM) of a particular type that provides volatile storage space. A storage device 240 may be configured as Redundant Array of Independent Disks (RAID) and stores backup files of different versions that are received from the clients 130_1 to 130_n, and a wide range of indices for data deduplication. The storage device 240 may be practiced in a Hard Disk (HD) drive, a Solid State Disk (SSD) drive, or others, to provide non-volatile storage space. A communications interface 260 is included in the system architecture and the processing unit 210 can thereby communicate with the client 130_1 to 130_n, or others. The communications interface 260 may be a LAN communications module, a Wireless Local Area Network (WLAN), or any combination thereof.

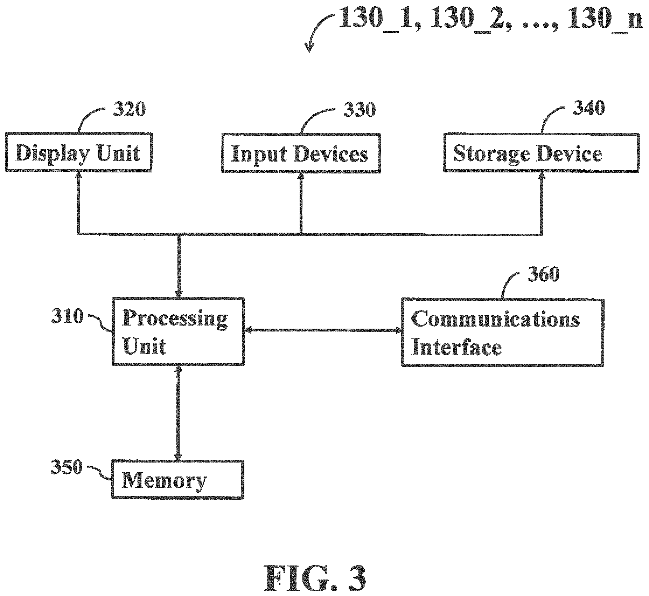

FIG. 3 is the system architecture of a client according to an embodiment of the invention. A processing unit 310 can be implemented in numerous ways, such as with dedicated hardware, or with general-purpose hardware (e.g., a single processor, multiple processors or graphics processing units capable of parallel computations, or others) that is programmed using microcode or software instructions to perform the functions recited herein. The processing unit 310 may contain at least an ALU and a bit shifter. The system architecture further includes a memory 350 for storing necessary data in execution, such as runtime variables, data tables, etc., and a storage device 340 for storing a wide range of electronic files, such as Web pages, word processing files, spreadsheet files, presentation files, video files, audio files, or others. The memory 350 may be a RAM of a particular type that provides volatile storage space. The storage device 340 may be practiced in a HD drive, a SSD drive, or others, to provide non-volatile storage space. A communications interface 360 is included in the system architecture and the processing unit 310 can thereby communicate with the storage server 110, or others. The communications interface 360 may be a LAN/WLAN/Bluetooth communications module, a 2G/3G/4G/5G telephony communications module, or others. The system architecture further includes one or more input devices 330 to receive user input, such as a keyboard, a mouse, a touch panel, or others. A user may press hard keys on the keyboard to input characters, control a mouse pointer on a display by operating the mouse, or control an executed application with one or more gestures made on the touch panel. The gestures include, but are not limited to, a single-click, a double-click, a single-finger drag, and a multiple finger drag. A display unit 320, such as a Thin Film Transistor Liquid-Crystal Display (TFT-LCD) panel, an Organic Light-Emitting Diode (OLED) panel, or others, may also be included to display input letters, alphanumeric characters and symbols, dragged paths, drawings, or screens provided by an application for the user to view.

A backup engine may be installed in the storage server 110 and realized by program codes with relevant data abstracts that can be loaded and executed by the processing unit 210 to perform the following functions: The backup engine compresses data by removing duplicate data across source streams (e.g. backup files) and usually across all the data in the storage device 240. The backup engine may receive different versions of source streams from the clients 130_1 to 130_n and divide each source stream into a sequence of fixed or variable sized data chunks. For each data chunk, a cryptographic hash may be calculated as its fingerprint. The fingerprint is used as a catalog of the data chunk stored in the storage server 110, allowing the detection of duplicates. To reduce space for storing the data stream, the fingerprint of each input data chunk is compared with a number of fingerprints of data chunks stored in the storage server 110. The input data chunk may be unique from all data chunks have been stored (or backed up) in the storage device 240. Or, the input data chunk may be duplicated with any data chunk has been stored (or backed up) in the storage device 240. The backup engine may find the duplicate data chunks (hereinafter referred to as duplicate chunks) from the data streams, determines the locations where the duplicate chunks have been stored in the storage device 240 and replaces raw data of the duplicate chunks of the data stream with pointers pointing to the determined locations (the process is also referred to as a data deduplication procedure.) Each duplicate chunk may be represented in the form <fingerprint, location_on_disk> to indicate a reference to the existing copy of the data chunk has been stored in the storage device 240. Otherwise, the data chunks that are not labeled as duplicated are considered unique, a copy of the data chunks with their fingerprints are stored in the storage device 240. The backup engine may load all the fingerprints of the data chunks of the storage device 240 into the memory 250 for the use of discovering duplicate chunks from each data stream. Although the generated fingerprints can be expressed as compressed versions of the data chunks, in most cases, the memory 250 cannot offer enough space for storing all the fingerprints.

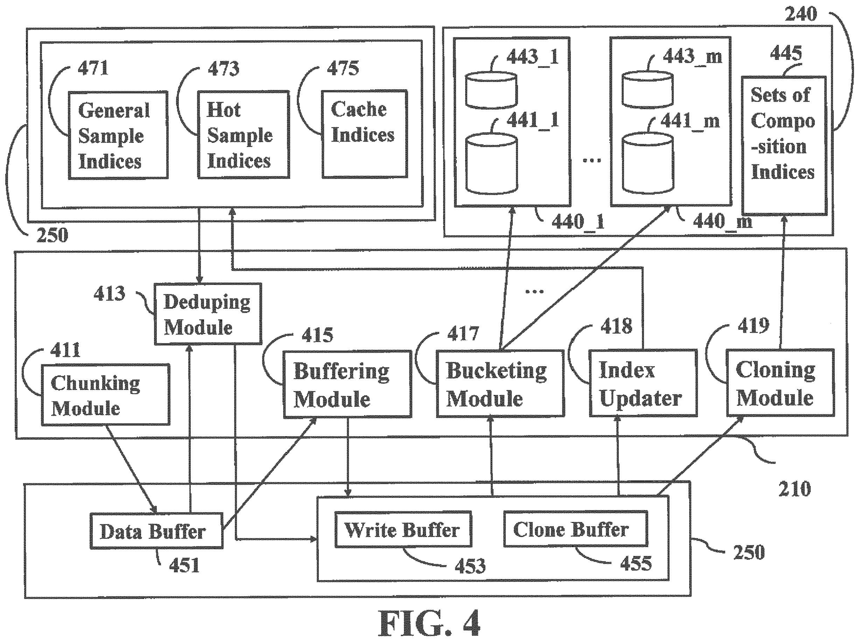

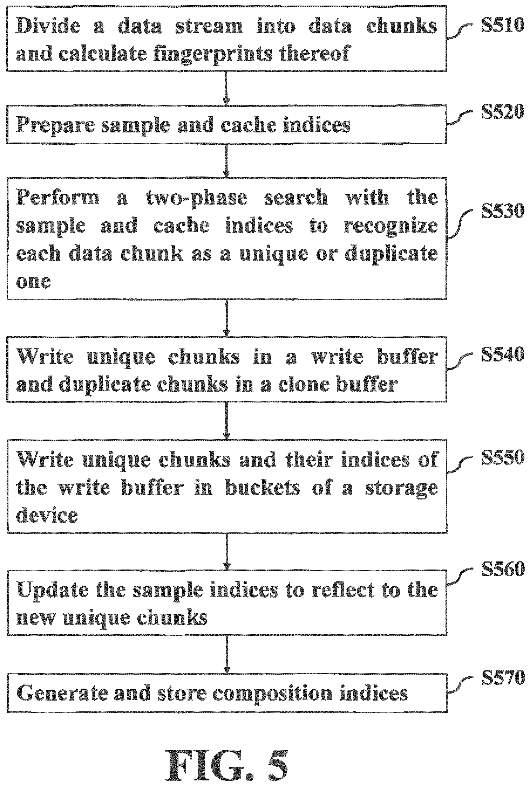

To overcome the aforementioned limitations, embodiments of methods and apparatuses for a file backup are introduced to provide a mechanism for selecting relevant indices from all the indices of the data chunks of the storage device 240 and using algorithms with the selected indices to discover duplicate chunks from the data stream. FIG. 4 is a block diagram for a file backup according to an embodiment of the invention. FIG. 5 is a flowchart illustrating a method for deduplicating data chunks according to an embodiment of the invention. A chunking module 411 may receive a data stream from any of the clients 130_1 to 130_n, divide the data stream into data chunks and calculate fingerprints of the data chunks (step S510). The data chunks and their fingerprints may be stored in a data buffer 451 of the memory 250. The chunking module 411 may prepare sample and cache indices for the data chunks (step S520). The sample indices may include general sample indices 471 shared by all the source streams received from the clients 130_1 to 130_n and hot sample indices 473 shared by the source streams associated with the same OS (Operating System). The general sample indices 471, the hot sample indices 473 and cache indices 475 may be stored in the memory 250. The deduping module 413 may perform a two-phase search with the sample and cache indices to recognize each data chunk of the data buffer 451 as a unique or duplicate one (step S530). A buffering module 415 may write unique chunks of the data buffer 451 in the write buffer 453 of the memory 250 and duplicate chunks of the data buffer 451 in the clone buffer 455 of the memory 250 (step S540). The bucketing module 417 may write the unique chunks and their fingerprints of the write buffer 453 in relevant buckets of the storage device 240 (step S550). The index updater 418 may update the sample indices of the memory 250 to reflect the new unique chunks (step S560). The cloning module 419 may generate and store composition indices 445 for each data chunk and stores them in the storage device 240 (step S570). All the components as shown in FIG 4 may be referred to as a backup engine collectively. The chunking module 411, the deduping module 413, the buffering module 415, the bucketing module 417, the index updater 418 and the cloning module 419 may be implemented in software instructions, macrocode, microcode, or others, that can be loaded and executed by the processing unit 210 to perform respective operations.

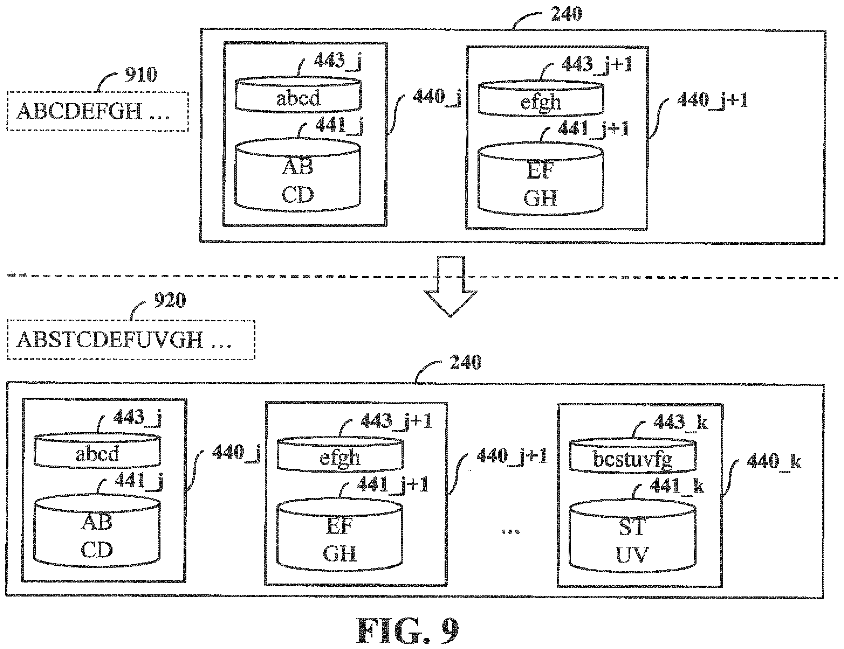

Refer to FIG. 4. The storage device 240 may allocate space for storing buckets 440_1 to 440_m, where m is a positive integer greater than 0, and each bucket 440_i may include a chunk section 441_i and a metadata section 443_i, where i represents an integer ranging from 1 to m. Each metadata section 443_i stores fingerprints (hereinafter referred to as Physical-locality Preserved Indices PPIs hereinafter) of the data chunks of the chunk section 441_i and extra indices (hereinafter referred to as Probing-based Logical-locality Indices PLIs) associated with historical probing-neighbors of the data chunks of the chunk section 441_i. FIG. 9 is a schematic diagram illustrating PPIs and PLIs according to an embodiment of the invention. The whole diagram is separated into two parts. The upper part of FIG. 9 illustrates a generation of the content of buckets 440_j and 440_j+1 according to an input data stream 910, where j is an integer ranging from 1 to m, letters {A} to {H} of the data stream 510 denote data chunks in a row. Assume that the data chunks {A} to {H} are unique: The backup engine may calculate fingerprints {a} to {h} for the data chunks {A} to {H}, respectively, and store the data chunks {A} to {D} in the chunk section 441_j, the data chunks {E} to {H} in the chunk section 441_j+1, the fingerprints {a} to {d} as PPIs in the metadata section 443_j and the fingerprints {e} to {h} as PPIs in the metadata section 443_j+1. The lower part of FIG. 9 illustrates a generation of the content of a bucket 440_k according to an input data stream 920 later, where k is an integer ranging from j+2 to m, letters {S}, {T}, {U} and {V} of the data stream 920 denote data chunks. Since the data chunks {A} to {H} of the data stream 920 are duplicate, the backup engine detects that the unique chunks {S} and {T} follow the duplicate chunk {B} and are followed by the duplicate chunk {C}, and the unique chunks {U} and {V} follow the duplicate chunk {F} and are followed by the duplicate chunk {G}. The backup engine may calculate fingerprints {s} to {v} for the data chunks {S} to {V}, respectively, and store the data chunks {S} to {V} in the chunk section 441_k and the fingerprints {s} to {v} as PPIs in the metadata section 443_k. The backup engine may further append PLIs {b}, {c}, {f} and {g} to the metadata section 443_k. PPIs associated with the data chunks of the chunk section 441_k are also stored in the same bucket 440_k. PLIs associated with the data chunks of the chunk section 441_k are indices of another data chunks that are neighboring with the data chunks of the chunk section 441_k appeared in a previously backed-up data stream. Note that each metadata section may additionally store flags and each flag indicates the corresponding one is PPI or PLI.

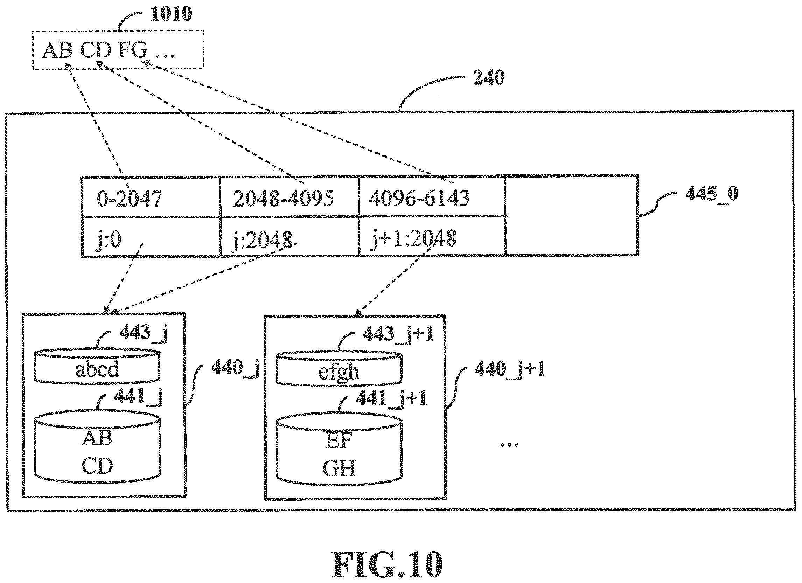

The storage device 240 may allocate space for storing a set of composition indices 445 for each input source stream. The set of composition indices 445 for a source stream store information indicating where the data chunks of the source stream are actually stored in the buckets 440_1 to 440_m in a row. FIG. 10 is a schematic diagram illustrating a set of composition indices according to an embodiment of the invention. For example, the data chunks {A} to {D} of the input source stream 1010 are stored in the chunk section 441_j and the data chunks {F} and {G} thereof are stored in the chunk section 441_j+1. The backup engine stores the composition indices 445_0 for the source stream 1010. Each set of the composition indices may store mappings between logical locations and physical locations for the data chunks. The logical locations as shown in the upper row of the composition indices 445_0 indicate locations (or offsets) of one or more data chunks appeared in the source stream 1010. For example, 0-2047 of the upper row indicates that the data chunks {A} and {B} include the 0^{th} to 2047^{th} bytes of the source stream 1010, 2048-4095 of the upper row indicates that the data chunks {C} and {D} include the 2048^{th} to 4095^{th} bytes of the source stream 1010, and so on. The physical locations as shown in the lower row of the composition indices 445_0 indicate where one or more data chunks are actually stored in the buckets 440_1 to 440_m. Each physical location may be represented in the form <bucket_no:offset>, where bucket no and offset respectively indicate the identity and the start offset of the bucket storing specific data chunk(s). For example, j:0 of the lower row indicates that the data chunks {A} and {B} are stored from the 0^{th} byte of the j^{th} bucket 440_j, j:2048 of the lower row indicates that the data chunks {C} and {D} are stored from the 2048^{th} byte of the j^{th} bucket 440_j, and so on. Each column of the composition indices 450_0 includes a combination of one logical location and one physical location to indicate that specified bytes appeared in the source stream 1010 are actually stored in a particular location of a particular bucket. For example, the first column of the composition indices 445_0 shows that the 0^{th} to 2047^{th} bytes of the source stream 1010 are actually stored from the 0^{th} byte of the j^{th} bucket 440_j. Note that two or more sets of composition indices may store deduplication results for two or more versions of one backup file. In addition to the composition indices, profile information of each set of composition indices, such as a backup file ID, a version number, a set ID, a start offset, a length, or others, is generated and stored in the storage device 240.

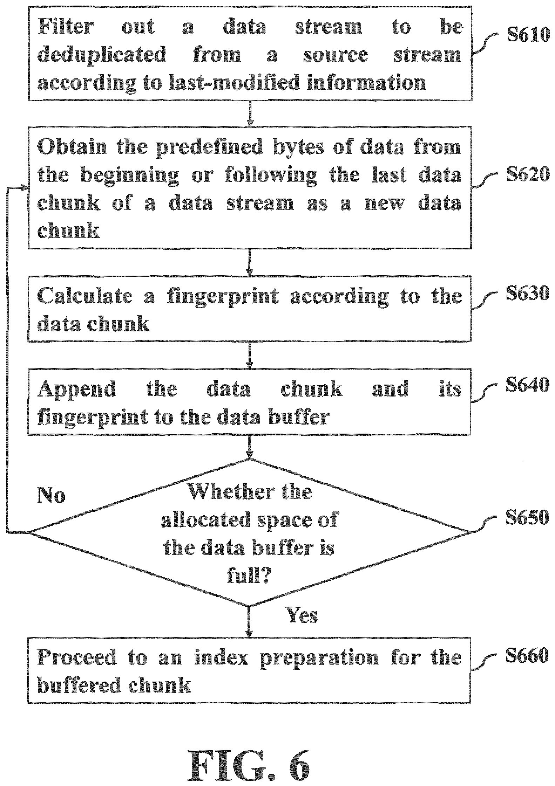

Details of step S510 in FIG. 5 may be provided as follows: The chunking module 411 may be run in a multitasking environment to process one or more source streams received from one or more clients. One task may be created and a portion of the data buffer 451 may be allocated to process one source stream for filtering out a data stream to be deduplicated from the source stream, dividing the filtered data stream into data chunks, calculating their fingerprints and storing them in the allocated space. Therefore, multiple backups from one or more clients can be realized in parallel to improve the overall performance. FIG. 6 is a flowchart illustrating a method for the data chunking and indexing, performed by the chunking module 411, according to an embodiment of the invention. For each source stream, the chunking module 411 may filter out a data stream to be deduplicated therefrom according to last-modified information (step S610). The last-modified information may be implemented in Changed-Block-Tracking (CBT) information of the VMWare environment or the like to indicate which data blocks or sectors have changed since the last backup. Profile information, such as a backup file identity (ID), the length, the created date and time and the last modified date and time of the backup file, the IP address of the client sending the backup file, an OS that the backup file belongs to, a file system hosting the backup file, the last-modified information, or others, may be carried in a header with the source stream. The filtered data stream includes but not limited to all the data sectors indicated by the last-modified information. Note that, for each logical address of the remaining part of the input source stream, the backup engine may find a composition index from the set 445 corresponding to the previous version of the source stream, which is associated with the same logical address, and directly insert the found one into the set 445 corresponding to the input source stream. The detailed data organization and generation of the sets of composition indices 445 will be discussed later. After that, the chunking module 411 may repeatedly obtain the predefined bytes of data from the beginning or following the last data chunk of the data stream as a new data chunk (step S620) until the allocated space of the data buffer 451 is full (the "Yes" path of step S660). The predefined length may be set to 2K, 4K, 8K or 16K bytes to conform to the block/sector size of the file system hosting the data stream according to the profile information. The predefined length may have an equal or higher precision than the block/sector size. For example, the predefined length may be 1/2^r of the block/sector size, where r is a positive integer being equal to or higher than 0. The block/sector size may be 32K, 64K, 128K bytes, or more. Since the divided data chunks are aligned with the partitioned blocks/sectors of the file system hosting the data stream, the efficiency for finding duplicate chunks may be improved. In alternative embodiments, the data stream may be divided into variable lengths of data chunks depending on the content thereof. Each time a new data chunk is obtained, an fingerprint is calculated to catalog the data chunk (step S630) and the data chunk, the calculated fingerprint and its profile information, such as a logical location of the source stream, or others, are appended to the data buffer 451 (step S640). A cryptographic hash, such as MD5, SHA-1, SHA-2, SHA-256, etc., of the data chunk may be calculated as its fingerprint (may also be referred to as its checksum). The data buffer 451 may allocate space of 2M, 4M, 8M or 16M bytes for storing the data chunks and their indices. When the allocated space of the data buffer 451 is full (the "Yes" path of step S650), the chunking module 411 may proceed to an index preparation for the buffered chunk (step S660).

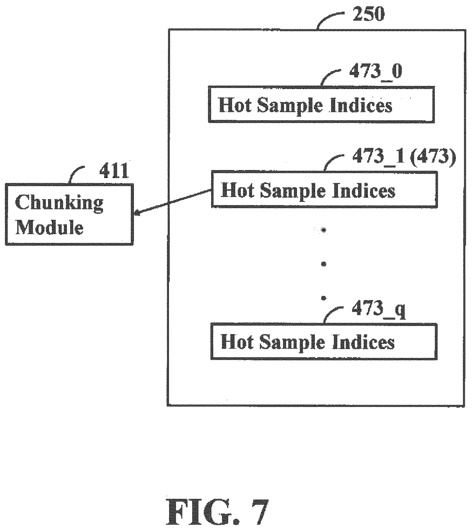

Details of step S520 in FIG. 5 may be provided as follows: Specified content across data streams associated with the same OS is much similar than that associated with different OSs. For example, binary code of Office 2017 run on macOS 10 of one client (e.g. the client 130_1) is very similar with that run on macOS 10 of another client (e.g. the client 130_n). However, binary code of Office 2017 run on macOS 10 is different from binary code of Office 2017 run on Windows 10 although both macOS 10 and Windows 10 are installed in the same client. Therefore, the popularity of duplicate chunks across the data streams belong to different OSs may be different. The popularity of one duplicate chunk may be expressed by a quantity of references made to the duplicate chunk within and across data streams. It may improve the hit ratio and the search time to cache the indices of popular chunks are in the memory 250. FIG. 7 is a schematic diagram for selecting hot sample indices for an OS according to an embodiment of the invention. The memory 250 stores hot sample indices 473_0 to 473_q belong to different OSs, respectively. After detecting which OS is associated with the data stream (or source stream) by examining the profile information of the header, the chunking module 411 selects relevant one as the hot sample indices 473 in use for deduplicating the data stream. Suppose that the hot sample indices 473_0 and 473_1 are associated with Windows 10 and macOS 10, respectively. The chunking module 411 selects the hot sample indices 473_1 for use when the data stream belongs to macOS 10. Note that each of the hot sample indices 473_0 to 473_q is shared by all the data streams belong to the same OS. In alternative embodiments, the selection of hot sample indices 473 may be performed by the deduping module 413 and the invention should not be limited thereto.

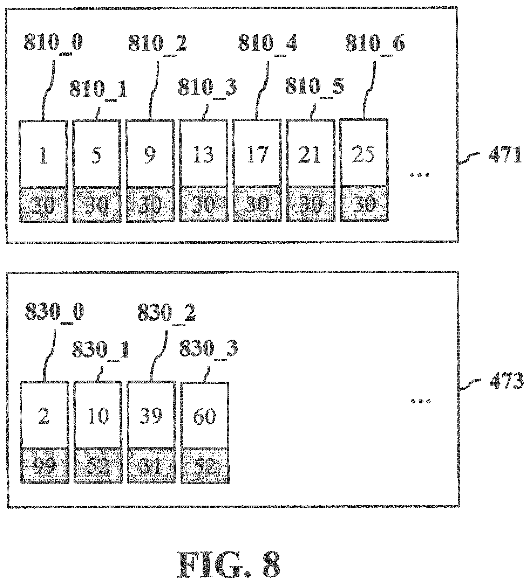

Refer to FIG. 4. The general sample indices 471 are indices sampled from unique chunks. The general sample indices 471 may be generated by using well-known algorithms, such as a progressive sampling, a reservoir sampling, etc., to make the general sample indices uniform. In alternative embodiments, one index may be randomly selected to remove from the general sample indices 471 to lower the sampling rate when the general sample indices 471 are full. FIG. 8 is a schematic diagram of general and hot sample indices according to an embodiment of the invention. The sampling rate for the general sample indices 471 is 1/4. The general sample indices 471 include indices of the 1^{st}, 5^{th}, 9^{th}, 13^{th}, 14^{th}, 17^{th}, 25^{th} unique chunks sequentially where the sequential numbers of the unique chunks may refer to the upper part of the boxes 810_0 to 810_6. A popularity is additionally stored with each unique chunk index in general and hot sample indices 471 and 473. Each popularity represents how many times that the associated unique chunk index hits during the data deduplication procedure and is shown in the lower part of the box in dots. In alternative embodiments, each popularity may represent a weighted hit count and the popularity is increased by a greater value for a closer hit. When an index of a new unique chunk requires to store in the full space, one index should be removed from the general sample indices 471. However, the index may be very popular but, unfortunately, should be removed to conform to the sampling rate. To avoid removing the popular indices, the memory 250 further allocate fixed space for storing hot sample indices 473. The backup engine determines whether the popularity of the removed index greater than the minimum popularity of the hot sample indices 473. If so, the backup engine may replace the index with the minimum popularity of the hot sample indices 473 with the removed index. Exemplary hot sample indices 473 include at least the 2^{nd}, 10^{th}, 39^{th}, 60^{th} unique chunks whose popularities are 99, 52, 31 and 52, respectively. The content of the general and hot sample indices 471 and 473 may be continuously modified during the data deduplication procedure and they may be periodically flushed to the storage device 240 to avoid data missing after an unexpected power down or system crash.

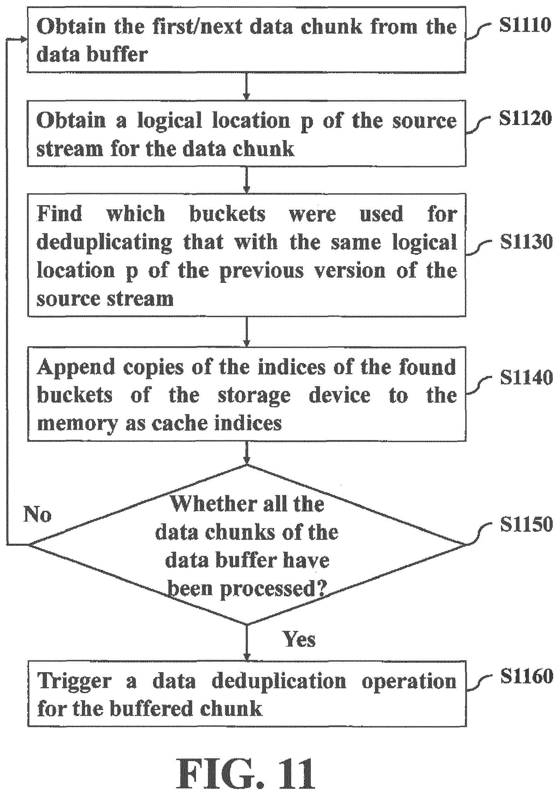

Further details of step S520 in FIG. 5 may be provided as follows: Although the data stream is filtered out from the source stream according to the last-modified information, many of the buffered chunks may be the same with certain data chunks of the previous version of the source stream because the precision of the block/sector size is lower than that of the data chunks. For example, it is supposed to have the sector size of 64K bytes and the predefined length of the data chunks of 4Kbytes. The VMware may indicate that the whole 64K bytes has changed in the last-modified information although only 4K bytes thereof was actually changed since the last backup. Therefore, at most the 60K bytes of data can be deduplicated to save storage space. FIG. 11 is a flowchart illustrating a method for preparing cache indices for the buffered chunks, performed by the chunking module 411, according to an embodiment of the invention. The chunking module 411 repeatedly executes a loop for generating and storing relevant cache indices 475 (steps S1110 to S1150) until all the data chunks of the data buffer 451 have been processed (the "Yes" path of step S1150). In each iteration, after obtaining the first or next data chunk from the data buffer 451 (step S1110), the chunking module 411 obtains a logical location p of the source stream for the data chunk (step S1120). The logical location p may be expressed in <p1-p2>, where p1 and p2 denote a start and an end offsets appeared in the source stream, respectively. The chunking module 411 finds which buckets were used for deduplicating that with the same logical location p of the previous version of the source stream (step S1130) and appends copies of the indices (including PPIs and PLIs if presented) of the found buckets of the storage device 240 to the memory 250 as cache indices (step S1140). Refer to FIG. 10. Suppose that the source stream 1010 includes the backup file of the previous version: For a data chunk with a logical location 2048-4095, the chunking module 411 may append copies of the PPIs {c} and {d} or PPIs {a} to {d} to the cache indices 475. After all the data chunks of the data buffer 451 have been processed (the "Yes" path of step S1150), the chunking module 411 may send a signal to the deduping module 413 to start a data deduplication operation for the buffered chunks (step S1160).

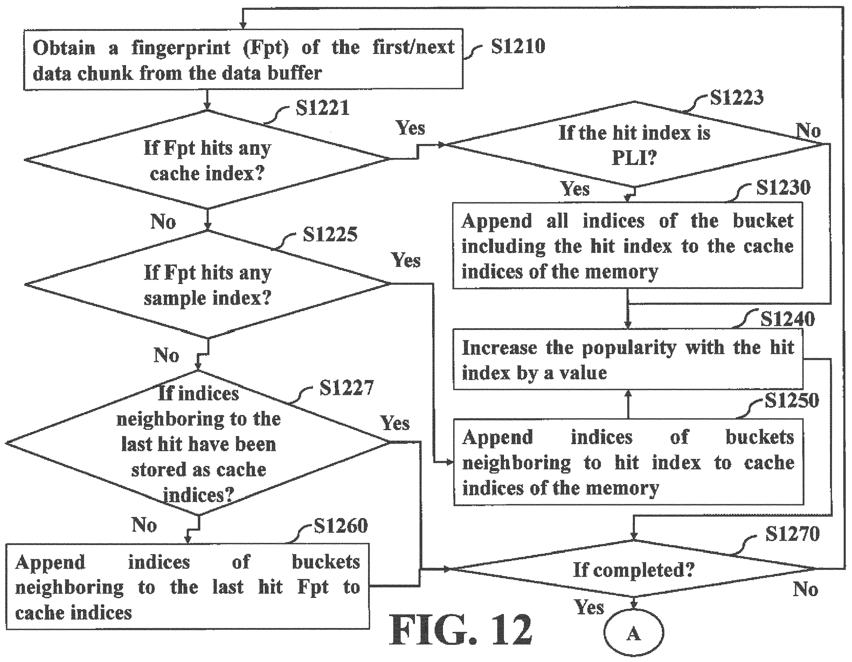

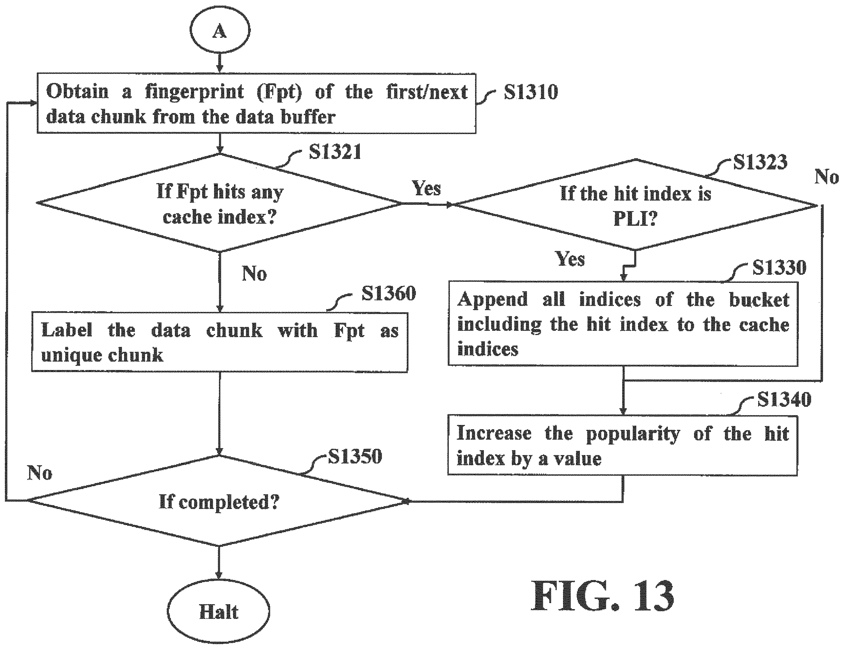

Further details of step S530 in FIG. 5 may be provided as follows: The deduping module 413 may employ a two-phase search to recognize each data chunk of the data buffer 451 is unique or duplicate. The deduping module 413, in phase one search, determines whether each fingerprint (Fpt) of the input data stream hits any of the general and hot sample indices 471 and 473 and the cache indices 475, labels the data chunk with each hit Fpt of the data buffer 451 as a duplicate chunk, and extends the cache indices 475; and in phase two search, determines whether each Fpt hits any of the extended cache indices, labels the data chunk with each hit Fpt of the data buffer 451 as a duplicate chunk and labels the other data chunks of the data buffer 451 as unique chunks. FIGS. 12 and 13 are flowcharts illustrating a method for searching duplicate chunks in the phases one and two, respectively, according to an embodiment of the invention. In phase one search, a loop (steps S1210 to S1270) is repeatedly executed until all the data chunks of the data buffer 451 have been processed completely (the "Yes" path of step S1270). In each iteration, the deduping module 413 may first search the cache indices 475 then the sample indices 471 and 473 for an Fpt of the first or next data chunk obtained from the data buffer 451.

When Fpt hits any of the cache indices 475 and the hit index is PLI (the "Yes" path of step S1223 followed by the "Yes" path of step S1221), the deduping module 413 may append all indices of the bucket including a data chunk with the hit index to the cache indices 475 (step S1230), label the data chunk with Fpt as a duplicate chunk, increase the popularity with the hit index of the cache indices 471 by a value (step S1240). Refer to the lower part of FIG. 9. For example, suppose that the hit index of the cache indices 475 is PLI {c}. The deduping module 413 may append PPIs {a} to {d} of the bucket 440_j to the cache indices 471 (step S1230).

When Fpt hits any of the cache indices 475 and the hit index is PPI (the "No" path of step S1223 followed by the "Yes" path of step S1221), the deduping module 413 may label the data chunk with Fpt as a duplicate chunk and increase the popularity with the hit index of the cache indices 471 by a value (step S1240).

When Fpt hits none of the cache indices 475 but hits any of the general or hot sample indices 471 or 473 (the "Yes" path of step S1225 followed by the "No" path of step S1221), the deduping module 413 may append all indices of the buckets neighboring to the hit index to the cache indices 475 (step S1250), label the data chunk with Fpt as a duplicate chunk and increase the popularity with the hit index of the general or hot sample indices 471 or 473 by a value (step S1240). Refer to the lower part of FIG. 9. For example, suppose that the hit index of the general sample indices 471 is PPI {c}. The deduping module 413 may append PPIs {e} to {h} of the bucket 440_j+1 to the cache indices 471 (step S1240).

When Fpt hits none of the cache indices 475, general and hot sample indices 471 and 473, and some or all the indices of bucket(s) neighboring to the last hit index haven't been stored in the cache indices 475 (the "No" path of step S1227 followed by the "No" path of step S1225 followed by the "No" path of step S1221), the deduping module 413 may append the missing indices of the buckets neighboring to the last hit index to the cache indices 475 (step S1260). Refer to the lower part of FIG. 9. For example, suppose that the last hit index of the general sample indices 471 is PPI {d}. The deduping module 413 may append PPIs {e} to {h} of the bucket 440_j+1 to the cache indices 471 (step S1240).

Note that the operations of steps S1230, S1250 and S1260 append relevant indices to the cache indices 471 and expect to benefit the subsequent searching for potential duplicate chunks.

After all the data chunks of the data buffer 451 have been processed (the "Yes" path of step S1270), the deduping module 413 may enter phase two search (FIG. 13). In phase two search, a loop (steps S1310 to S1350) is repeatedly executed until all the data chunks of the data buffer 451 have been processed completely (the "Yes" path of step S1350). In each iteration, the deduping module 413 may search only the cache indices 475 that have been updated in the phase one search for Fpt of the first or next data chunk obtained from the data buffer 451. Operations of steps S1321, S1323, S1330 and S1340 are similar with that of steps S1221, S1223, S1230 and S1440 and are omitted for brevity. The deduping module 413 may label the data chunk with Fpt as an unique chunk (step S1360) when Fpt does not hit any of the cache indices 475 (the "No" path of step S1321).

The label of a duplicate or unique chunk for each data chunk of the data buffer 451 is stored in the data buffer 451. In addition, the status indicating whether each data chunk of the data buffer 451 hasn't been processed, or has undergone the phase one or two search is also stored in the data buffer.

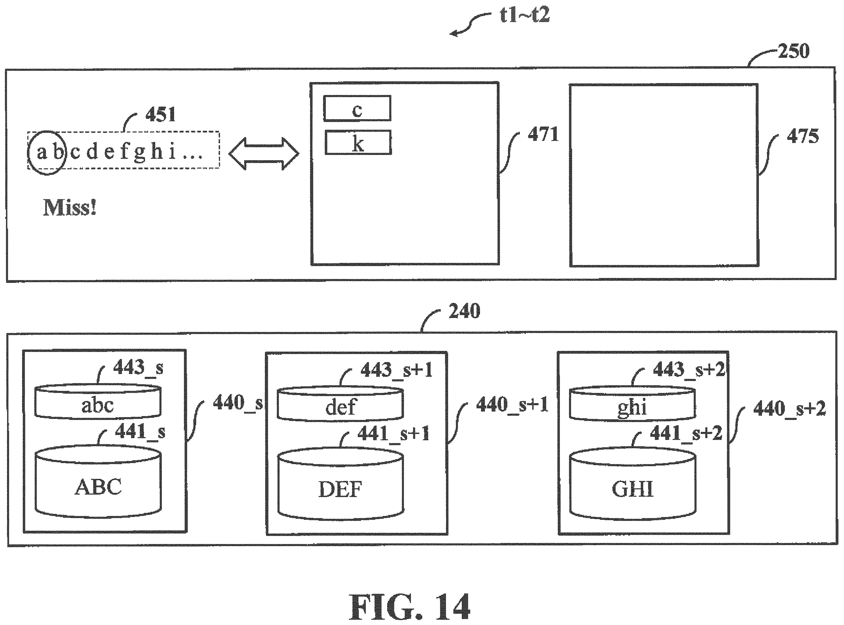

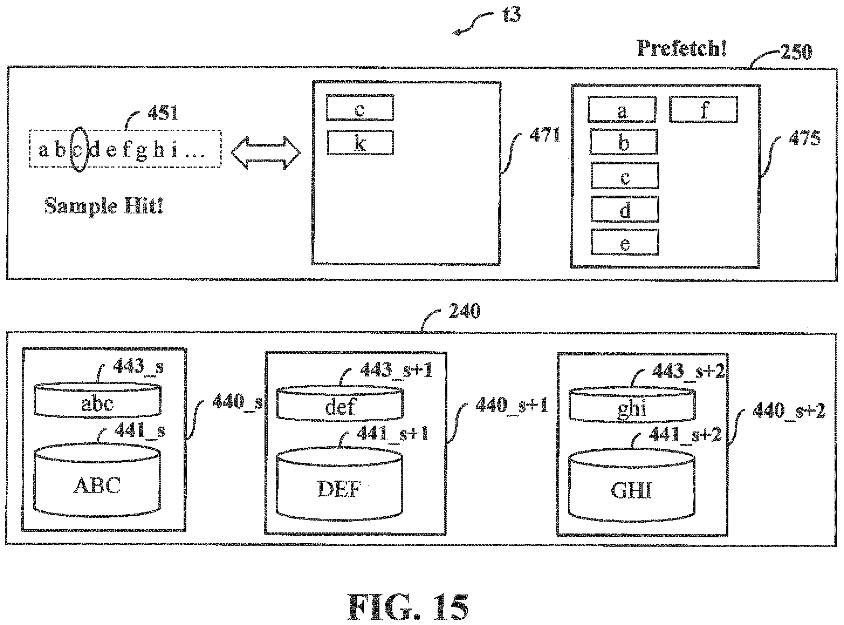

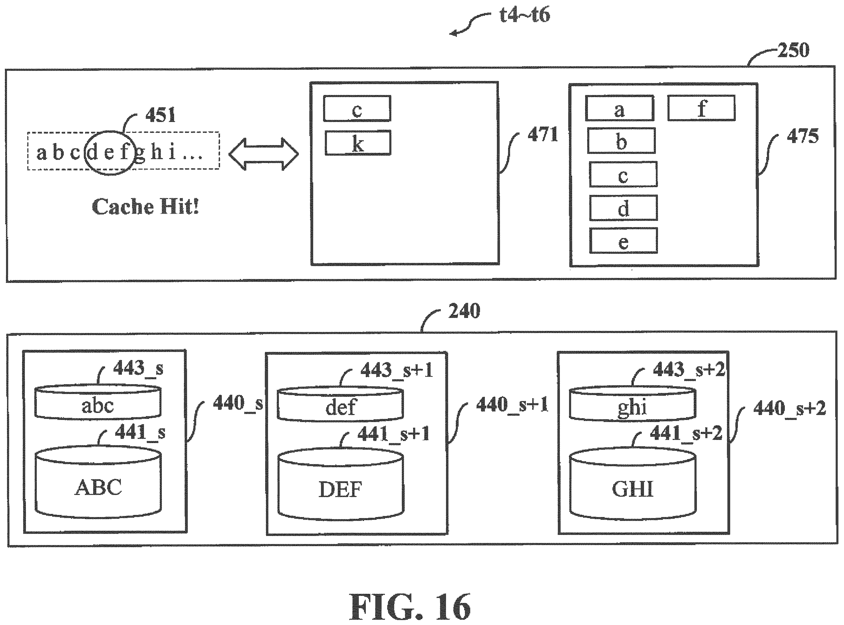

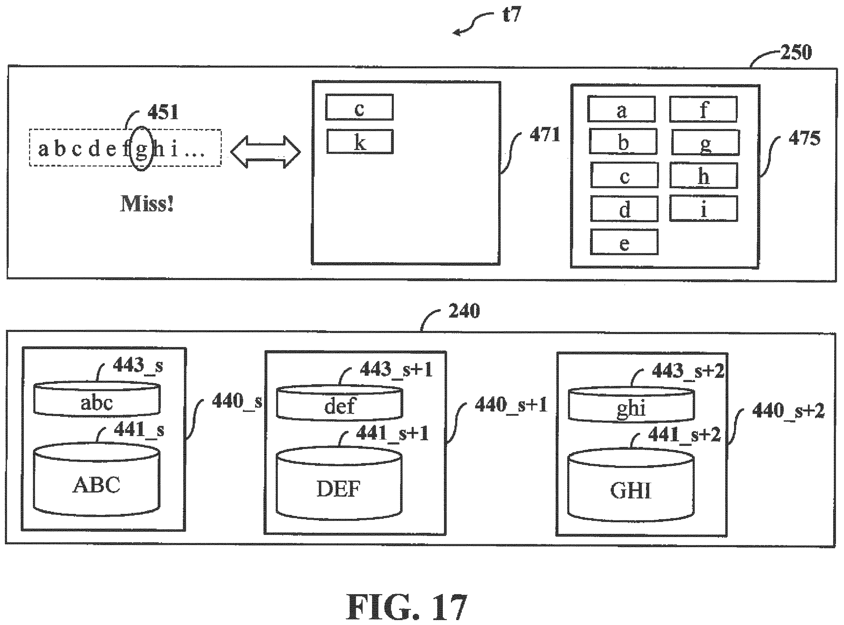

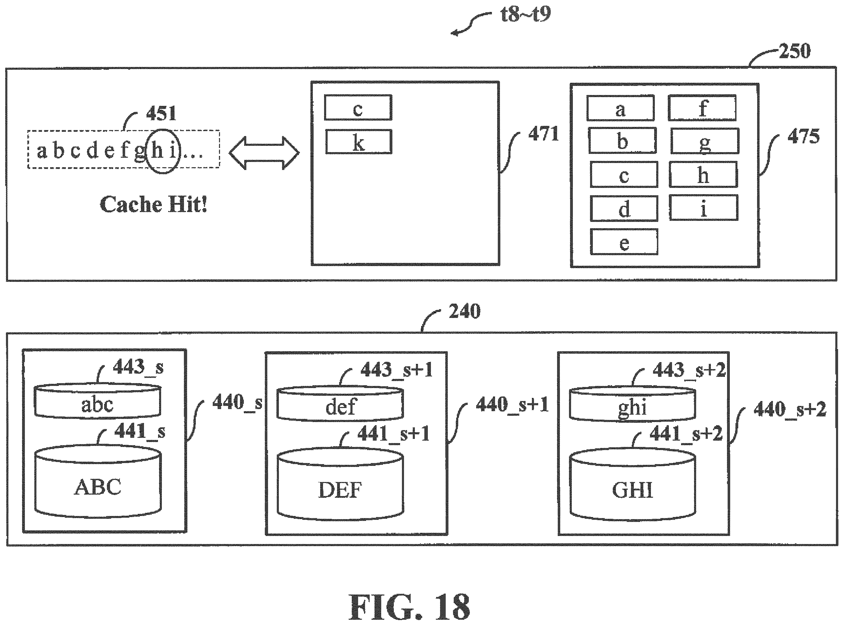

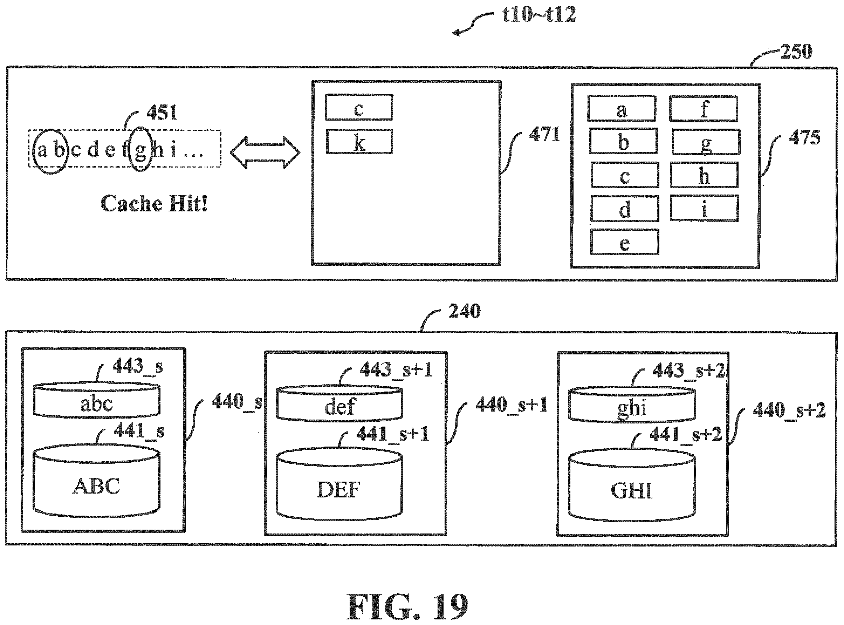

Several use cases are introduced to explain how the two-phase search operates. FIGS. 14 to 19 are schematic diagrams illustrating the variations of indices stored in the memory 250 at moments t1 to t9 in the phase one search according to an embodiment of the invention. Refer to FIG. 14. Suppose that the buckets 440_s to 440_s+2 initially hold data chunks {A} to {I} and metadata thereof, the general sample indices 471 only stores the indices {c} and {k}, the hot sample indices 473 (not shown in FIGS. 14 to 19) stores no relevant indices, and the data buffer 451 holds the indices {a} to {i} of the data chunks {A} to {I} of the divided data stream that are identical to the data chunks held in the buckets 440_s to 440_s+2. At the moments t1 to t2, the deduping module 413 discovers that the indices {a} and {b} of the data buffer 451 are absent from the cache indices 475 and the general sample indices 471 and do nothing. Refer to FIG. 15. At the moment t3, the deduping module 413 discovers that the index {c} of the data buffer 451 hits one of the general sample index (the "Yes" path of step S1225 followed by the "No" path of step S1221) and appends (or prefetches) the indices {a} to {f} of the buckets 440_s and 440_s+1 to the cache indices 475 (step S1250). Refer to FIG. 16. At the moments t4 to t6, the deduping module 413 discovers that the index {d} to {f} of the data buffer 451 hit three PPIs of the cache indices 475. Note that the above hits take the benefits of the prior prefetches at the moment t3. Refer to FIG. 17. At the moment t7, the deduping module 413 discovers that the index {g} of the data buffer 451 is absent from the cache indices 475 and the general sample indices 471 and some indices of the bucket neighboring to the last hit index {f} haven't been stored in the cache indices 475 (the "No" path of step S1227 followed by the "No" path of step S1225 followed by the "No" path of step S1221), and appends (or prefetches) the indices {g} to {i} of the bucket 440_s+2 to the cache indices 475 (step S1250). Refer to FIG. 18. At the moments t8 to t9, the deduping module 413 discovers that the indices {h} and {i} of the data buffer 451 hit two PPIs of the cache indices 475. Note that the above hits take the benefits of the prior prefetches at the moment t7. After the phase one search, the data chunks {A}, {B} and {G} of the data buffer 451 have not been deduped. FIG. 19 is a schematic diagram illustrating the search results at moments t10 to t12 in phase two according to an embodiment of the invention. At the moments t10 to t12, the deduping module 413 discovers that the indices {a}, {b} and {g} of the data buffer 451 hit three PPIs of the cache indices 475. Note that the above hits take the benefits of the prior prefetches during phase one.

Further details of step S540 in FIG. 5 may be provided as follows: The buffering module 415 periodically picks up the top of the data chunks from the data buffer 451. The buffering module 415 moves the data chunk, the fingerprint and the profile information to a write buffer 453 when the picked data chunk has undergone the phase two search and is labeled as an unique chunk. The buffering module 415 moves the data chunk and the profile information to a clone buffer 455 when the picked data chunk has undergone the phase two search and is labeled as a duplicate chunk.

Further details of step S550 in FIG. 5 may be provided as follows: Once the write buffer 453 or the clone buffer 455 is full, the bucketing module 417 may be triggered to store each data chunk of the write buffer 453 in available space of the chunk section 441_m of the last bucket 440_m or the chunk section 441_m+1 of a newly created bucket 440_m+1, and store the respective index to available space in the last metadata section 443_m or the newly created metadata section 443_m+1. Moreover, the bucketing module 417 stores the physical location of each data bucket, such as the bucket identity and the start offset of the bucket, in the write buffer 453.

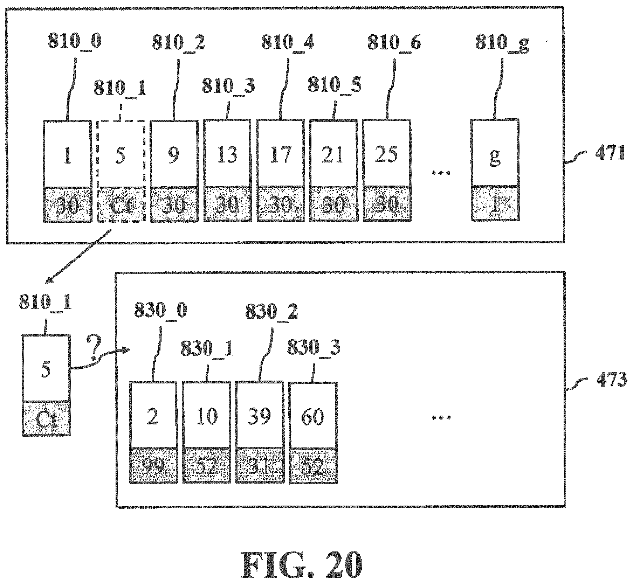

Further details of step S560 in FIG. 5 may be provided as follows: After the bucketing module 417 completes the operations for all the data buckets of the write buffer 453, the index updater 418 may update the general sample indices 471 and hot sample indices 473 in response to the new unique chunks. With the increased volume of the unique chunks stored in the storage device 240, some of the indices of new unique chunks may need to be append to the general sample indices 471 and the corresponding indices of the general sample indices 471 has to be removed. FIG. 20 is a schematic diagram illustrating updates of the general and hot sample indices 471 and 473 according to an embodiment of the invention. To ensure popular indices not to be removed, for example, after a new index 810_g is appended to the general sample indices 471, the index updater 418 may determine whether the popularity Ct of the removed index 810_1 is greater than the minimum popularity of the hot sample indices 473. If so, the index updater 418 may replace the index with the minimum popularity of the hot sample indices 473 with the removed index 810_1.

Further details of step S570 in FIG. 5 may be provided as follows: After the bucketing module 417 completes the operations for all the data buckets of the write buffer 453, the cloning module 419 may generate a combination of the logical location and the corresponding physical location for each data chunk stored in the write buffer 453 and the clone buffer 455 in the order of the logical locations of the data chunks, and append the combinations to one corresponding set of the composition indices 445 of the storage device 240.

Although the above embodiments describe that the entire backup engine is implemented in the storage server 110, some modules may be moved to any of the clients 130_1 to 130_n with relevant modifications to reduce the workload of the storage server 110 and the invention should not be limited thereto. Refer to FIG. 4. For example, except for the buckets 440_1 to 440_m and sets of composition indices 445, the other components may be implemented with relevant modifications in the client. The client may maintain its own general sample indices, hot sample indices and cache indices 475 in the memory 350. The memory 350 may further allocate space for the data buffer 451, the write buffer 453 and the clone buffer 455. The modules 411 to 419 maybe run on the processing unit 310 of the client. The bucketing module 417 run on the processing unit 310 may issue requests to the storage server 110 for appending unique chunks via the communications interface 360 and obtain physical locations storing the unique chunks from corresponding responses sent by the storage server 110 via the communications interface. Moreover, the cloning module 419 run on the processing unit 310 may issue requests to the storage server 110 for appending the combinations of the logical locations and the physical locations for one source stream via the communications interface 360. The cloning module 419 may maintain a copy of composition indices sets 445 for the source streams generated by the client in the storage device 340. Note that the deduplication of the aforementioned deployment may only be optimized across the source streams of different versions locally. The choice among different types of the deployments is a tradeoff between the overall deduplication rate and the workload of the storage server 110.

Some implementations may directly deduplicate the entire source stream by using the data deduplication procedure. However, it consumes excessive time the computation resources for processing the entire source stream.

Alternative implementation may remove the unchanged blocks or sectors according to the last-modified information and copy the composition indices corresponding to the unchanged blocks or sectors of the previous version of the source stream and directly replaces the unchanged blocks or sectors with the copied composition indices. The remaining part of the source stream is directly stored as raw data. However, the VMware or the file system hosting the backup file may generate the last-modified information to indicate that the entire block or sector has changed since the last backup even only one byte of the block or sector have been changed.

The aforementioned implementations are internal designs of previous works and may not be considered as prior art because they may not be known in public.

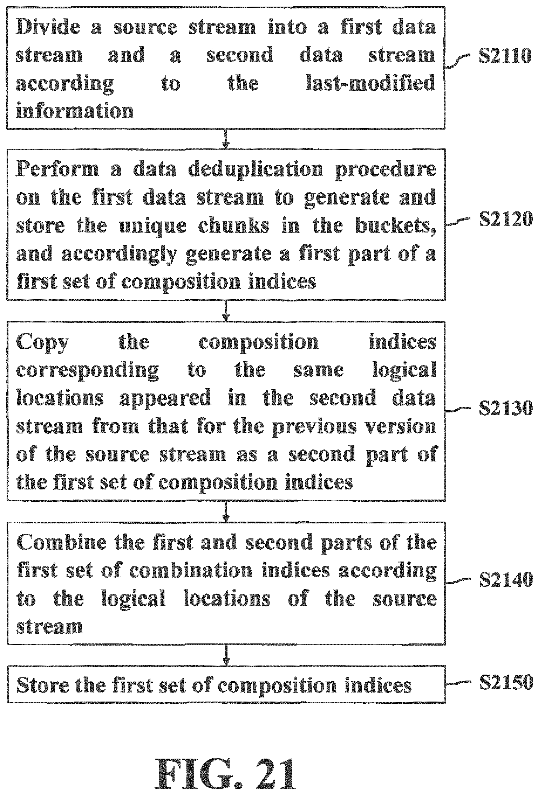

To address the problems happened in the above implementations, FIG. 21 is a flowchart illustrating a method for a file backup, performed by a backup engine installed in any of the storage server 110 and the clients 130_1 to 130_n. The backup engine may divide a source stream into a first data stream and a second data stream according to the last-modified information (step S2110). The second data stream includes the unchanged parts since the last backup, such as certain blocks or sectors, indicated by the last-modified information. The backup engine may translate logical addresses, such as block or sector numbers, indicated in the last-modified information into the aforementioned logical locations. The second data stream may not be the one with continuous logic locations but may be composed of the discontinuous data segments. For example, the second data stream may include 0-1023, 4096-8191 and 10240-12400 bytes while the first data stream may include the others. Step S1110 may be performed by the chunking module 411. The backup engine may perform the aforementioned data deduplication procedure as shown in FIG. 5 on the first data stream to generate and store the unique chunks in the buckets 440 1 to 440_m of the storage device 240 and accordingly generate a first part of a first set of composition indices corresponding to the unique and duplicate chunks of the first data stream (step S2120). The unique chunks may be unique from all data chunks that are searched in the data deduplication procedure and have been stored in the storage device 240. Since the predefined length of data chunks, such as 2K, 4K or 8K bytes, is shorter than the data block or sector size, such as 32K, 64K or 128K bytes, the data deduplication procedure can filter out unchanged portions of the blocks or sectors indicated by the last-modified information and prevent the unchanged portions to be stored in the buckets 440_1 to 440_m as raw data. The backup engine may copy the composition indices corresponding to the logical locations appeared in the second data stream from a second set of the composition indices 445 for the previous version of the source stream as a second part of the first set of composition indices (step S2130). Following the example given in step S2110, composition indices corresponding to 0∼1023, 4096∼8191 and 10240-12400 bytes may be copied from the second set of composition indices 445. The backup engine may combine the first and second parts of the first set of composition indices according to the logical locations of the source stream (step S2140), and store the first set of combined composition indices 445 in the storage device 240 for the source stream (step S2150). Steps S2130 to S2150 may be performed by the cloning module 419.

Some or all of the aforementioned embodiments of the method of the invention may be implemented in a computer program such as an operating system for a computer, a driver for a dedicated hardware of a computer, or a software application program. Other types of programs may also be suitable, as previously explained. Since the implementation of the various embodiments of the present invention into a computer program can be achieved by the skilled person using his routine skills, such an implementation will not be discussed for reasons of brevity. The computer program implementing some or more embodiments of the method of the present invention may be stored on a suitable computer-readable data carrier such as a DVD, CD-ROM, USB stick, a hard disk, which may be located in a network server accessible via a network such as the Internet, or any other suitable carrier.

The computer program may be advantageously stored on computation equipment, such as a computer, a notebook computer, a tablet PC, a mobile phone, a digital camera, a consumer electronic equipment, or others, such that the user of the computation equipment benefits from the aforementioned embodiments of methods implemented by the computer program when running on the computation equipment. Such the computation equipment may be connected to peripheral devices for registering user actions such as a computer mouse, a keyboard, a touch-sensitive screen or pad and so on.

Although the embodiment has been described as having specific elements in FIGS. 2 to 4, it should be noted that additional elements may be included to achieve better performance without departing from the spirit of the invention. While the process flows described in FIGS. 5-6, 11-13 and 21 include a number of operations that appear to occur in a specific order, it should be apparent that these processes can include more or fewer operations, which can be executed serially or in parallel (e.g., using parallel processors or a multi-threading environment).

The invention is defined and limited only by the scope of appended claims.

## Claims

1. A file backup apparatus (110; 130_1; 130_2; 130_n) **characterized by** comprising:
a storage device (240; 340); and
a processing unit (210; 310), coupled to the storage device (240; 340), dividing a source stream into a first data stream and a second data stream according to last-modified information; performing a data deduplication procedure on the first data stream to generate and store unique chunks in the storage device (240; 340) and generate a first part of a first set of composition indices (445; 445_0) for the first data stream, **characterized in that** the unique chunks are unique from all first data chunks that are searched in the data deduplication procedure and have been stored in the storage device (240; 340); copying composition indices (445; 445_0) corresponding to logical locations of the second data stream from a second set of composition indices (445; 445_0) for a previous version of the source stream as a second part of the first set of composition indices (445; 445_0); combining the first part and the second part of the first set of composition indices (445; 445_0) according to logical locations of the source stream; and storing the first set of composition indices (445; 445_0) in the storage device (240; 340), **characterized in that** the first set of composition indices (445;445_0) store information indicating where a plurality of second data chunks of the first data stream and the second data stream are actually stored in the storage device (240; 340).

2. The file backup apparatus (110; 130_1; 130_2; 130_n) of claim 1, **characterized in that** the last-modified information indicates which data blocks or sectors have changed since the last backup, and a length of each first data chunk is shorter than a data block or sector size.

3. The file backup apparatus (110; 130_1; 130_2; 130_n) of claim 1 or 2, **characterized in that** the data deduplication procedure comprises:
dividing the first data stream into second data chunks;
calculating fingerprints (Fpts) of the second data chunks;
preparing sample indices (471; 473) and cache indices (475) of the first data chunks in a memory (250; 350);
performing a two-phase search with the sample indices (471; 473) and the cache indices (475) to recognize each data chunk as a unique or duplicate chunk;
storing the unique chunks in the storage device (240; 340); and
generating the first part of the first set of composition indices (445; 445_0) for the first data stream.

4. The file backup apparatus (110; 130_1; 130_2; 130_n) of claim 1, 2 or 3, **characterized in that** the storage device (240; 340) stores a plurality of buckets (440_1∼440_m), each bucket stores a portion of the first data chunks, a Physical-locality Preserved Index (PPI) of the portion of the first data chunks, or stores a portion of the first data chunks, the PPI of the portion of the first data chunks and a Probing-based Logical-locality Index (PLI) associated with a historical probing-neighbor of the portion of the first data chunks, and the processing unit (210; 310) finds which buckets were used for deduplicating the first data chunks with the same logical locations as that of the first data stream; and collects the PPIs and PLIs of the found buckets as the cache indices (475).

5. The apparatus of claim 3, **characterized in that** the sample indices (471; 473) comprises general sample indices (471) and hot sample indices (473), and the hot sample indices (473) are associated with the same OS (Operating System) as that with the first data stream.

6. The apparatus of claim 5, **characterized in that** the processing unit (210; 310) appends an index to the general sample indices (471) and remove an index from the general sample indices (471); determines whether a popularity of the removed index is greater than the minimum popularity of the hot sample indices (473); and replaces the index with the minimum popularity with the removed index when the popularity of the removed index is greater than the minimum popularity of the hot sample indices (473).

7. The apparatus of claim 3, **characterized in that** the processing unit (210; 310), in phase one search, determines whether each Fpt hits any of the sample indices (471; 473) and the cache indices (475), labels the second data chunk with each hit Fpt as a duplicate chunk, and extends the cache indices (475); and in phase two search, determines whether each Fpt hits any of the extended cache indices (475), labels the second data chunk with each hit Fpt as a duplicate chunk and labels the other second data chunks as unique chunks.

8. The apparatus of claim 7, **characterized in that** the cache indices (475) comprises Physical-locality Preserved Indices (PPIs) of a portion of the first data chunks and Probing-based Logical-locality Indices (PLIs) associated with historical probing-neighbors of a portion of the first data chunks, and the processing unit (210; 310), when one Fpt hits a PLI, appends all indices of a bucket comprising a first data chunk with the hit PLI from the storage device (240; 340) to the cache indices (475).

9. The apparatus of claim 7 or 8, **characterized in that** the processing unit (210; 310), when one Fpt hits a sample index, appends all indices of buckets neighboring to the hit index from the storage device (240; 340) to the cache indices (475).

10. The apparatus of claim 7, 8 or 9, **characterized in that** the processing unit (210; 310), when one Fpt hits none of the cache indices (475) and sample indices (471; 473) and an index of a bucket neighboring to the last hit Fpt haven't been stored in the cache indices (475), appends the index of the bucket neighboring to the last hit Fpt from the storage device (240; 340) to the cache indices (475).

11. A non-transitory computer program product for a file backup when executed by a processing unit (210; 310) of a client or a storage server, the computer program product comprising program code to:
divide a source stream into a first data stream and a second data stream according to last-modified information;
perform a data deduplication procedure on the first data stream to generate and store unique chunks in a storage device (240; 340) and generate a first part of a first set of composition indices (445; 445_0) for the first data stream, **characterized in that** the unique chunks are unique from all first data chunks that are searched in the data deduplication procedure and have been stored in the storage device (240; 340);
copy composition indices (445; 445_0) corresponding to logical locations of the second data stream from a second set of composition indices (445; 445_0) for a previous version of the source stream as a second part of the first set of composition indices (445; 445_0);
combine the first part and the second part of the first set of composition indices (445; 445_0) according to logical locations of the source stream; and
store the first set of composition indices (445; 445_0) in the storage device (240; 340), **characterized in that** the first set of composition indices (445; 445_0) store information indicating where a plurality of data chunks of the first data stream and the second data stream are actually stored in the storage device (240; 340),
**characterized in that** the last-modified information indicates which data blocks or sectors have changed since the last backup, and a length of each first data chunk is shorter than a data block or sector size.

12. The non-transitory computer program product of claim 11, **characterized in that** the data deduplication procedure comprises:
dividing the first data stream into second data chunks;
calculating fingerprints (Fpts) of the second data chunks;
preparing sample indices (471; 473) and cache indices (475) of the first data chunks in a memory (250; 350);
performing a two-phase search with the sample indices (471; 473) and the cache indices to recognize each data chunk as a unique or duplicate chunk;
storing the unique chunks in the storage device (240; 340); and
generating the first part of the first set of composition indices (445; 445_0) for the first data stream.

13. The non-transitory computer program product of claim 11 or 12, **characterized in that** the storage device (240; 340) stores a plurality of buckets (440_1∼440_m), each bucket stores a portion of the first data chunks, a Physical-locality Preserved Index (PPI) of the portion of the first data chunks, or stores a portion of the first data chunks, the PPI of the portion of the first data chunks and a Probing-based Logical-locality Index (PLI) associated with a historical probing-neighbor of the portion of the first data chunks, and
the program code is further to:
find which buckets were used for deduplicating the first data chunks with the same logical locations as that of the first data stream; and
collect the PPIs and PLIs of the found buckets as the cache indices (475).

14. The non-transitory computer program product of claim 12, **characterized in that** the sample indices (471; 473) comprises general sample indices (471) and hot sample indices (473), and the hot sample indices (473) are associated with the same OS (Operating System) as that with the first data stream.

15. The non-transitory computer program product of claim 12, **characterized in that** the two-phase search comprises:
in phase one search, determining whether each Fpt hits any of the sample indices (471; 473) and the cache indices (475), labels the second data chunk with each hit Fpt as a duplicate chunk, and extends the cache indices (475); and
in phase two search, determines whether each Fpt hits any of the extended cache indices (475), labels the second data chunk with each hit Fpt as a duplicate chunk and labels the other second data chunks as unique chunks.
